# FASCICULE DE BREVET EUROPEEN

(11) **EP 1 181 608 B1**
(45) Date de publication et mention de la délivrance du brevet: **23.07.2003**
(21) Numéro de dépôt: 00927355.8
(22) Date de dépôt: 17.05.2000
(51) Int. Cl.: G02B 7/182

(54) **SUPPORT DE MIROIR**
SPIEGELHALTERUNG
MIRROR SUPPORT

(30) Priorité: 18.05.1999 FR 9906285
(43) Date de publication de la demande: 27.02.2002
(73) Titulaire: COMMISSARIAT A L'ENERGIE ATOMIQUE, 75752 Paris Cédex 15 (FR)
(72) Inventeur: DESCHASEAUX, Gérard, F-33830 Belin Beliet (FR)
(74) Mandataire: Ilgart, Jean-Christophe
(86) Numéro de dépôt international: FR0001325
(87) Numéro de publication internationale: WO00070384

(56) Documents cités:
- US-A- 4 401 288
- US-A- 4 655 548
- US-A- 4 869 583
- US-A- 4 880 301

## Description

Le sujet de cette invention est un support de miroir, utilisé en particulier pour régler la position et l'orientation de miroirs réfléchissant le faisceau dans une cavité oscillatrice de laser.

Certains lasers comportent une cavité régénératrice où la lumière transite en se réfléchissant successivement sur deux miroirs aux extrémités. Ces miroirs doivent être orientés avec la plus extrême précision pour renvoyer le faisceau dans la direction voulue. Ils peuvent porter des motifs réfléchissants bornés qui définissent la forme du faisceau de sortie, ce qui impose encore de les aligner parfaitement le long du trajet du faisceau en réglant leur position latérale, voire leur position angulaire puisque leurs motifs réfléchissants ne sont généralement pas circulaires. Des montures de réglage de miroirs sont par exemple décrites dans US 4,655,548 et US 4,880,301.

On doit donc régler avec beaucoup de soin les positions des deux miroirs, et on recherche ainsi un support réglable des miroirs qui offre une précision et une sensibilité suffisantes de réglage, qui soit stable et qu'on puisse immobiliser, afin de pouvoir déplacer la cavité sans craindre de dérégler la position des miroirs. L'invention satisfait à ces exigences.

Sous sa forme la plus générale, elle concerne un support de miroir, caractérisé en ce qu'il comprend un bâti, un levier suspendu au bâti par des ressorts, une monture du miroir à un bout d'un bras, le miroir étant à fixer à la monture perpendiculairement au bras, et deux ensembles de butées et de contre-butées réglables coulissant à travers le bâti et s'appuyant sur le levier, les ensembles de butées et de contre-butées coulissant respectivement dans deux directions perpendiculaires entre elles et perpendiculaires au levier, les butées étant antagonistes des ressorts, et le bras étant articulé au levier à une position excentrée du levier, et articulé au bâti. Au sens de l'invention, les contre-butées sont des pièces mécaniques antagonistes des butées, qui permettent de retenir une pièce -ici, le levier- entre elles et les butées à une position définie par celle des butées. Les butées et contre-butées peuvent consister en des jeux de vis opposées qui peuvent être en prolongement.

Ce dispositif est suffisant pour assurer l'orientation des miroirs, qui est la contrainte la plus importante. Si on souhaite régler aussi l'alignement des miroirs, il est avantageux que le bâti comprenne une partie fixe, une première partie mobile coulissant sur la partie fixe dans une première direction de translation et une deuxième partie mobile coulissant sur la première partie mobile dans une deuxième direction de translation et à laquelle le levier est suspendu, des ressorts reliant la première partie mobile à la partie fixe et à la deuxième partie mobile et s'étendant respectivement dans la première direction et la deuxième direction de translation, des butées réglables s'étendant respectivement à travers la partie fixe dans la première direction de translation jusqu'à la première partie mobile et à travers la première partie mobile dans la deuxième direction de translation jusqu'à la deuxième partie mobile, les butées étant antagonistes des ressorts, et des vis de verrouillage reliant la première partie mobile et s'étendant respectivement dans la première direction de translation et la deuxième direction de translation.

Enfin, la position angulaire du miroir, en le faisant tourner dans son plan, peut être réglée si la monture comprend une partie fixée au bras et un plateau tournant sur la partie fixée au bras, le miroir étant fixé au plateau, et un moyen de réglage de position angulaire du plateau.

Il est enfin avantageux que les butées soient des vis de réglage ou que les contre-butées soient des vis de pression.

Une grande finesse de réglage d'orientation est obtenue si chacun des ensembles de butées et de contre-butées comprend une butée et une contre-butée proches de la monture et une butée et une contre-butée éloignées de la monture, et que le bras est articulé au bâti près du miroir et au levier à l'opposé du miroir et de façon adjacente à la butée et à la contre-butée éloignées de la monture.

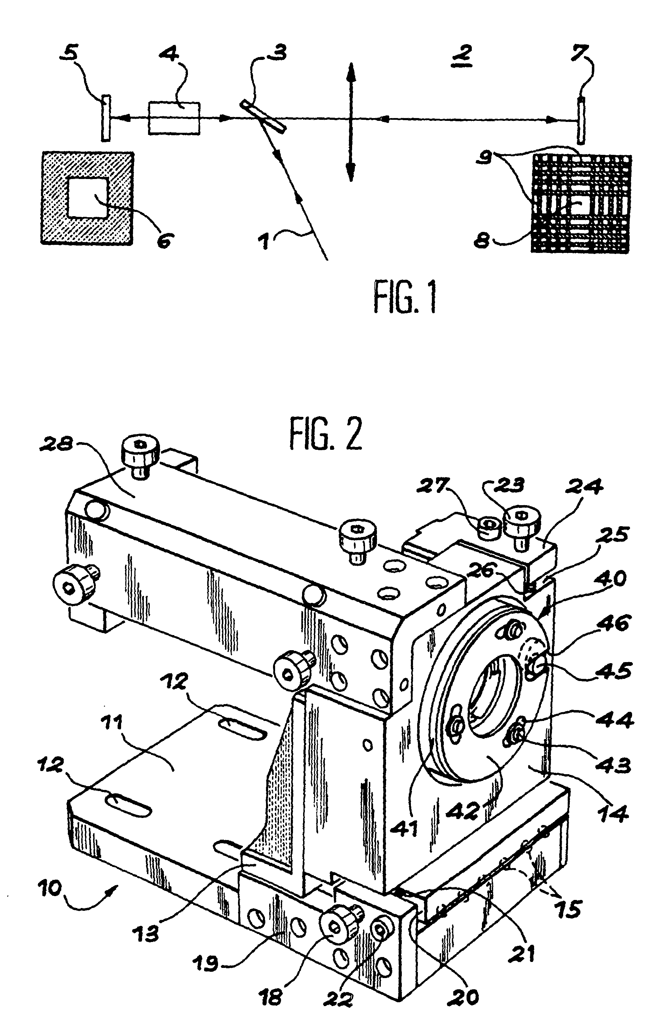

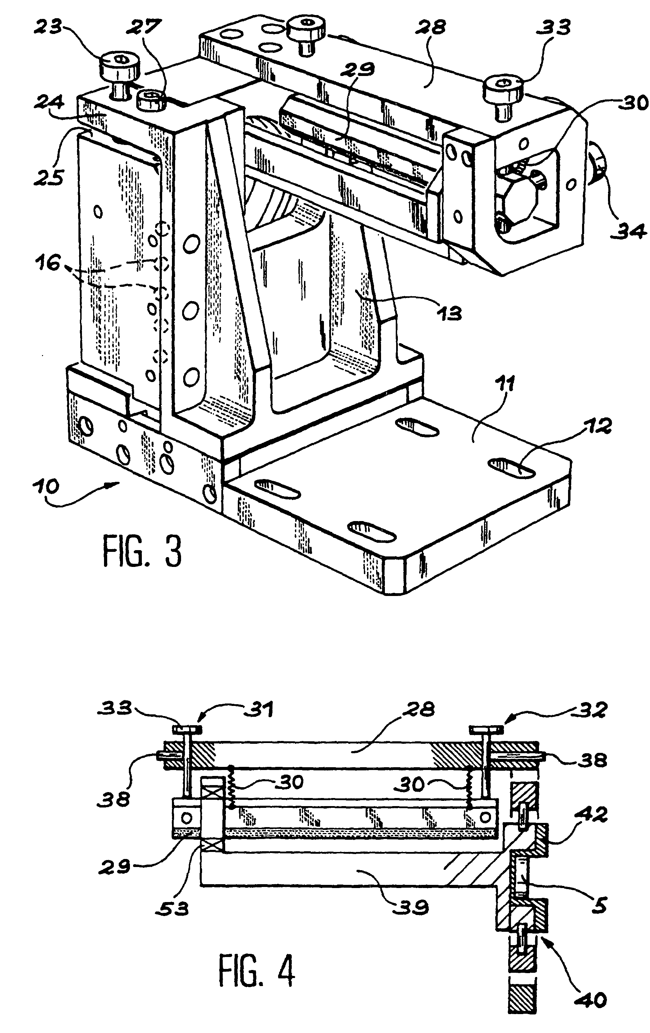

L'invention sera décrite maintenant plus en détail à l'aide des figures suivantes :
■ La figure 1 est une vue schématique d'une cavité de laser,
■ Les figures 2 et 3 sont des vues générales du support de miroir,
■ Et les autres figures 4, 5, 6 et 7 illustrent plus en détail le système mécanique à levier de suspension.

Un faisceau lumineux polarisé 1 originaire d'un laser arrive obliquement dans une cavité régénératrice 2 longiligne (figure 1), et un polariseur 3 le renvoie vers un amplificateur de lumière 4 puis vers un premier miroir 5 dont le motif réfléchissant 6 est un carré. Le faisceau 1 est renvoyé en sens opposé, à travers l'amplificateur 4 et le polariseur 3 qu'il traverse cette fois sans déviation, et finit par arriver à un second miroir 7 qui peut être placé à 4,4 mètres du précédent et dont le motif réfléchissant 8 correspond à la transformée de Fourier du carré 6 et plus précisément à une surface carrée à laquelle on a ôté des stries 9 s'entrecroisant en grille. Le faisceau 1 est renvoyé par le second miroir 7 vers le premier 5, mais la lentille 3 l'intercepte et il parcourt ainsi 50 allers-retours avant de ressortir dans sa direction de départ en sens opposé. Ce nombre d'allers-retours important nécessite une très grande précision de l'alignement des deux miroirs. Le support qu'on va maintenant décrire peut servir à l'un ou l'autre des miroirs 5 et 7. Les figures 2 et 3 montrent qu'il comprend d'abord un bâti 10 formé de trois parties, à savoir : une platine 11 supposée fixe et qui peut être fixée à la paroi intérieure de la cavité 2 par des vis non représentées traversant des perçages 12 ménagés à travers la platine 11 ; une première partie mobile 13 reliée à la platine 11 ; et une deuxième partie mobile 14 reliée à la précédente ; les liaisons entre les trois parties du bâti consistent en des chemins de roulement à billes 15 et 16 qui permettent à la première partie mobile 13 de coulisser en direction transversale sur la platine 11 et à la deuxième partie mobile 14 de coulisser en direction verticale sur la première 13. Une vis de réglage 18 est engagée à travers une portion en oreille 19 érigée sur la platine 11, et son extrémité libre atteint une face d'appui 20 de la première partie mobile 13 et la repousse quand la vis 18 est tournée ; un ressort 21, antagoniste de la vis 18, relie la face d'appui 20 à l'oreille 19 et les rapproche pour établir la butée de la vis 18. Ce système permet de régler avec précision et finesse la position transversale de la première partie mobile 13 et par conséquent celle de la deuxième partie mobile 14 ; il existe une autre vis 22, qui est une vis de pression ou de serrage, engagée dans la face d'appui 20 et qui traverse l'oreille 19 ; son vissage tend à rapprocher la face d'appui 20 de l'oreille 19 et verrouille donc la première partie mobile 13 sur la platine 11 en maintenant la butée de la vis 18, avec un léger serrage qui s'oppose aux déréglages sans introduire de contrainte mécanique susceptible de déformer excessivement les pièces et de fausser le réglage précédemment obtenu par la vis 18. Le système reste parfaitement stable même si le support de miroir est déplacé par la suite. Un système analogue existe pour unir les deux parties mobiles 13 et 14 entre elles et régler leur position en direction verticale : on retrouve une vis de réglage 23 filetée à travers une portion en oreille 24 de la première partie mobile 13 et s'appuyant sur une face d'appui 25 de la deuxième partie mobile 14, un ressort 26 tendu entre l'oreille 24 et la face d'appui 25, et une vis de serrage 27 apte à rapprocher les parties mobiles 13 et 14 à l'endroit de l'oreille 24 et de la face d'appui 25 pour maintenir la butée.

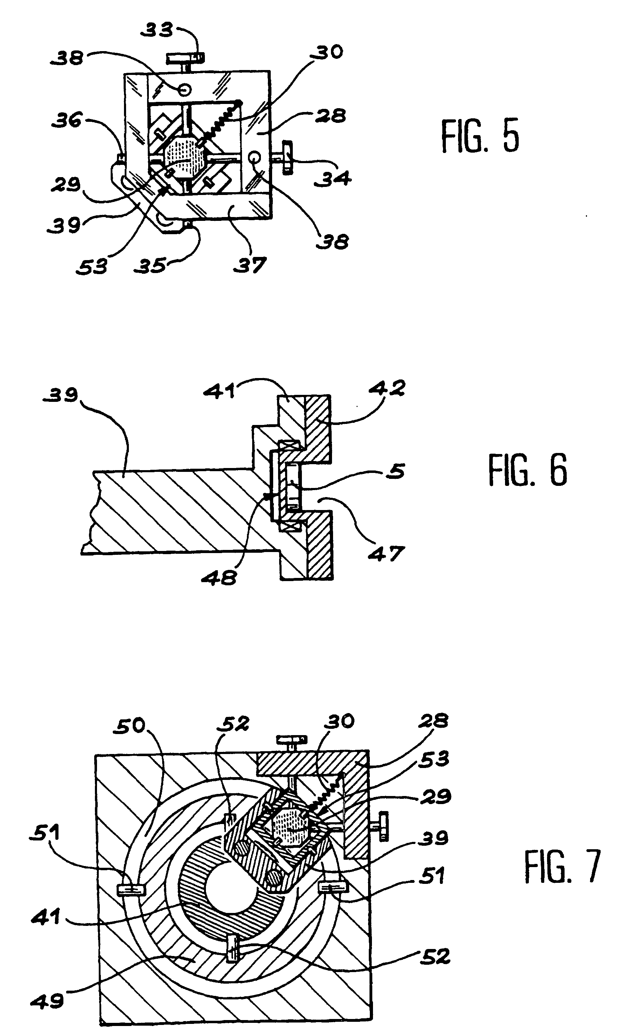

La deuxième partie mobile 14 porte une console 28 à section droite en équerre surplombant la platine 11 sur une assez grande longueur et qui abrite un levier 29, invisible sur la figure 2, qui constitue une pièce essentielle de l'invention. Il s'étend sensiblement perpendiculairement aux deux directions de déplacement des parties mobiles 13 et 14, de même que la console 28, et il est suspendu à elle par une paire de ressorts 30 disposés obliquement. On trouve des systèmes mécaniques ressemblant aux précédents pour régler la position du levier 29, sous forme de deux groupes 31 et 32 identiques et disposés à ses extrémités (figures 4 et 5) : chacun d'eux comprend une première vis de réglage 33 engagée à travers la console 28 et dont l'extrémité libre s'appuie sur le levier 29, une deuxième vis de réglage 34 disposée de la même façon mais perpendiculaire à la précédente, et encore deux autres vis 35 et 36 qui sont des vis de pression engagées à travers un étrier 37 de la console 28 et qui viennent buter contre des faces du levier 29 opposées aux faces sur lesquelles butent les vis 33 et 34 respectivement. Comme les vis 35 et 36 sont respectivement dans le prolongement des vis 33 et 34 par-delà le levier 29, on arrive à un montage en croix où les vis 33 et 34, antagonistes à l'action des ressorts 30, servent à régler la position du levier 29 et les vis 35 et 36 sont des vis de contre-butée qui maintiennent fermement le levier 29 à la position choisie précédemment en exerçant un léger serrage : leur action est équivalente à celle des vis de pression 22 et 27 déjà rencontrées. Enfin, d'autres vis de pression, portant les références 38, sont engagées dans la console 28 et leur extrémité vient s'appuyer sur le côté des vis 33 et 34 respectivement pour les retenir en place malgré des vibrations possibles.

La rotation des vis 33 d'un groupe 31 ou de l'autre 32 provoquera un basculement du levier 29 dans un plan, celle des vis 34 un basculement du levier 39 dans un autre plan, perpendiculaire au précédent ; on verra que ces basculement seront répercutés au miroir 5 ou 7 sous forme de rotations dans les mêmes directions.

Le levier 29 est accroché, par l'intermédiaire d'un joint de cardan 53 à un bras 39 qui en dépasse vers l'avant pour s'étendre à travers des ouvertures des parties mobiles 13 et 14 et s'achever en une monture 40 du miroir, saillant à l'extérieur du bâti 10. La monture 40 est composée d'une partie fixe 41, fixée au bras 39 et d'un plateau 42 disposé sur la partie fixe 41 de manière à pouvoir tourner (figures 2, 4 et 6) ; il est retenu sur la partie fixe 41 par un barillet tournant 48 par des vis 43 engagées dans des trous oblongs 44 du plateau 42 et qui autorisent donc un débattement angulaire de celui-ci ; un excentrique 45 est retenu dans une rainure radiale 46 du plateau 42 et sa rotation, qui peut être imposée par un tournevis, fait tourner le plateau 42 sur la partie fixe 41 : la position angulaire du miroir 5 ou 7 peut donc être réglée. Le miroir, par exemple 5, peut être collé au fond d'un alvéole 47 au centre du plateau 42 en étant dirigé à l'opposé du levier 29.

Le soutien de la monture 40 peut être assuré par la deuxième partie mobile 14 par l'intermédiaire d'un mécanisme en joint de cardan comprenant une bague 49 (figure 7) qui autorise les rotations imposées par les groupes de butées 31 et 32 tout en soulageant les ressorts 30 d'une partie du poids du levier 29 et des pièces qui lui sont liées : la bague 49 est logée, comme la monture 40, dans une ouverture 50 de la deuxième partie mobile 14 ; elle est unie à celle-ci par une première paire de billes 51, alignées horizontalement, et à celle-là par une deuxième paire de billes 52, alignées verticalement ; les directions d'alignement des paires de billes 51 et 52 correspondent à des axes de pivotement de la bague 49 et de la monture 40, qui prend donc librement l'orientation voulue.

Le joint de cardan 53 entre levier 29 et bras 39 est de construction analogue au précédent, comme on le voit aux figures 5 et 7. Comme il est à l'opposé du miroir 5, un mode habituel de réglage de l'orientation de celui-ci consistera à agir d'abord sur les vis 33 et 34 du groupe 31 adjacent au joint 53 pour que la profondeur de vissage lui soit presque parfaitement transmise et qu'une rotation comparativement importante soit transmise au bras 39 ; puis une action de vissage pourra être entreprise sur les vis 33 et 34 de l'autre groupe 32 pour faire pivoter le levier 29 autour des vis 33 et 34 du premier groupe 31 : le joint de cardan 53 ne sera que faiblement déplacé, ce qui conviendra pour régler finement l'orientation du miroir 5 en faisant tourner lentement le bras 39.

## Revendications

1. Support de miroir (5, 7), tel qu'il comprend un bâti (10 ;11, 13, 14 ; 28), un levier (29) suspendu au bâti par des ressorts (30), une monture (40) du miroir (5) à un bout d'un bras (39), le miroir étant à fixer à la monture perpendiculairement au bras, et deux ensembles (33, 35 ;34, 36) de butées et de contre-butées réglables coulissant à travers le bâti (28) et s'appuyant sur le levier (29), les contre-butées (35, 36) étant opposées aux butées (33, 34) par rapport au levier, les ensembles de butées et de contre-butées coulissant respectivement dans deux directions perpendiculaires entre elles et perpendiculaires au levier, les butées étant antagonistes des ressorts, et le bras étant articulé au levier à une position excentrée du levier, et articulé au bâti.

2. Support de miroir selon la revendication 1, **caractérisé en ce que** chacun des ensembles de butées et de contre-butées comprend une butée et une contre-butée proches (32) de la monture et une butée et une contre-butée éloignées (31) de la monture.

3. Support de miroir selon l'une quelconque des revendications 1 ou 2, **caractérisé en ce que** le bâti (10) comprend une partie fixe (11), une première partie mobile (13) coulissant sur la partie fixe dans une première direction de translation et une deuxième partie mobile (14) coulissant sur la première partie mobile (13) dans une deuxième direction de translation et à laquelle le levier (29) est suspendu, des ressorts (21, 26) reliant la première partie mobile à la partie fixe et à la deuxième partie mobile et s'étendant respectivement dans la première direction et la deuxième direction de translation, des butées réglables (18, 23) s'étendant respectivement à travers la partie fixe dans la première direction de translation jusqu'à la première partie mobile et à travers la première partie mobile dans la deuxième direction de translation jusqu'à la deuxième partie mobile, les butées étant antagonistes des ressorts, et des vis de verrouillage (22, 27) reliant la première partie mobile et s'étendant respectivement dans la première direction de translation et la deuxième direction de translation.

4. Support de miroir selon l'une quelconque des revendications 1 à 3, **caractérisé en ce que** les butées (18, 23, 33, 34) sont des vis de réglage.

5. Support de miroir selon l'une quelconque des revendications 1 à 4, **caractérisé en ce que** les contre-butées (35, 36) sont des vis de pression.

6. Support de miroir selon l'une quelconque des revendications 1 à 5, **caractérisé en ce que** la monture (40) comprend une partie (41) fixée au bras (29) et un plateau (42) tournant sur la partie fixée au bras, le miroir étant fixé au plateau, et un moyen (45) de réglage de position angulaire du plateau.

7. Support de miroir selon la revendication 6, **caractérisé en ce que** le moyen de réglage de position angulaire comprend un excentrique (45) dans une rainure (46) du plateau (42).

8. Support de miroir selon l'une quelconque des revendications 1 à 7, **caractérisé en ce qu'**il comprend une monture (40) du miroir pivotant dans le bâti (14) par l'intermédiaire d'une bague (49),- la bague pivotant dans le bâti autour d'un premier axe et la monture pivotant dans la bague autour d'un deuxième axe, perpendiculaire au premier axe.

9. Support de miroir selon la revendication 2, **caractérisé en ce que** le bras (39) est articulé au bâti près du miroir (5) et au levier (29) à l'opposé du miroir et de façon adjacente à la butée et à la contre-butée (31) éloignées de la monture.

## Patentansprüche

1. Spiegelhalter (5, 7) mit einem Gestell (10; 11, 13, 14; 28), einem Hebel (29), aufgehängt am Gestell mittels einer Feder (30), einer Montagevorrichtung (40) des Spiegels (5) an einem Ende eines Arms (39), wobei der Spiegel mit der Montagevorrichtung senkrecht zu dem Arm zu befestigen bzw. zu fixieren ist und zwei Sätze (33, 35; 34, 36) von Anschlägen und Gegenanschlägen gleitend durch das Gestell (28) hindurch verstellbar sind und sich auf dem Hebel (29) abstützen, die Gegenanschläge (35, 36) zu den Anschlägen (33, 34) in Bezug auf den Hebel entgegengesetzt sind, die Sätze der Anschläge und der Gegenanschläge jeweils in zwei zueinander senkrechten und zu dem Hebel senkrechten Richtungen gleiten, die Anschläge Federn entgegenwirken, und der Arm mit dem Hebel an einer exzentrischen Stelle des Hebels gelenkig verbunden ist und mit dem Gestell gelenkig verbunden ist.

2. Spiegelhalter nach Anspruch 1, **dadurch gekennzeichnet, dass** jeder der Anschlag- und Gegenanschlag-Sätze einen nahe bei der Montagevorrichtung befindlichen Anschlag (32) und einen von der Montageeinrichtung entfernten Gegenanschlag (31) umfasst.

3. Spiegelhalter nach einem der Ansprüche 1 oder 2, **dadurch gekennzeichnet, dass** das Gestell (10) umfasst: einen feststehenden Teil (11), einen ersten beweglichen Teil (13), auf dem feststehenden Teil in einer ersten Translationsrichtung verschiebbar, und einen zweiten beweglichen Teil (14), der auf dem ersten beweglichen Teil (13) in einer zweiten Translationsrichtung verschiebbar ist und an dem der Hebel (29) aufgehängt ist, Federn (21, 26), die den ersten beweglichen Teil mit dem feststehenden Teil und mit dem zweiten beweglichen Teil verbinden und sich jeweils in der ersten Translationsrichtung und in der zweiten Translationsrichtung erstrecken, nachstellbare bzw. einstellbare Anschläge (18, 23), die sich jeweils in der ersten Translationsrichtung durch den feststehenden Teil hindurch bis zu dem ersten beweglichen Teil erstrecken und in der zweiten Translationsrichtung durch den ersten beweglichen Teil hindurch bis zu dem zweiten beweglichen Teil, wobei die Anschläge Federn und Verriegelungsschrauben (22, 27) entgegenwirken, die den ersten beweglichen Teil verbinden und sich jeweils in der ersten Translationsrichtung und in der zweiten Translationsrichtung erstrecken.

4. Spiegelhalter nach einem der Ansprüche 1 bis 3, **dadurch gekennzeichnet, dass** die Anschläge (18, 23, 33, 34) Nachstell- bzw. Einstellschrauben sind.

5. Spiegelhalter nach einem der Ansprüche 1 bis 4, **dadurch gekennzeichnet, dass** die Gegenanschläge (35, 36) Druck- bzw. Stellschrauben sind.

6. Spiegelhalter nach einem der Ansprüche 1 bis 5, **dadurch gekennzeichnet, dass** die Montagevorrichtung (40) einen an dem Arm (39) befestigten Teil (41), eine auf dem am Arm befestigten Teil drehbare Platte (42), wobei der Spiegel an der Platte befestigt ist, und eine Einrichtung (45) zum Einstellen der Winkelstellung der Platte umfasst.

7. Spiegelhalter nach Anspruch 6, **dadurch gekennzeichnet, dass** die Winkelpositionierungseinrichtungen in einem Einschnitt (46) der Platte (42) einen Exzenter (45) umfassen.

8. Spiegelhalter nach einem der Ansprüche 1 bis 7, **dadurch gekennzeichnet, dass** er eine Montagevorrichtung des Spiegels umfasst, schwenkbar in dem Gestell (14) mittels eines Rings (49), wobei der Ring in dem Gestell um eine erste Achse schwenkbar ist und die Montagevorrichtung in dem Ring um eine zur ersten Achse senkrechte zweite Achse schwenkbar ist.

9. Spiegelhalter nach Anspruch 2, **dadurch gekennzeichnet, dass** der Arm (39) mit dem Gestell nahe dem Spiegel (5) gelenkig verbunden ist und mit dem Hebel (29) entgegengesetzt zum Spiegel und nahe dem Anschlag und dem Gegenanschlag (31), die von der Montagvorrichtung entfernt sind, verbunden ist.

## Claims

1. Mirror support (5, 7) such that it comprises a frame (10; 11, 13, 14; 28), a lever (29) suspended from the frame by springs (30), a mounting (40) for the mirror (5) at the end of an arm (39), the mirror being fixed to the mounting perpendicular to the arm, and two sets (33, 35; 34, 36) of adjustable stops and counter stops sliding through the frame (28) and bearing on the lever (29), the counter stops (35, 36) being on the side of the stops (33, 34) opposite the lever, the stops and counter stops assemblies sliding in the two directions perpendicular to each other and to the lever respectively, the stops opposing movement of the springs, and the arms being articulated to the lever at an eccentric position of the lever and articulated to the frame.

2. Mirror support according to claim 1, **characterized in that** each of the stops and counter stops comprises a stop and a counter stop (32) close to the mounting and a stop and a counter stop (31) remote from the mounting.

3. Mirror support according to any one of claims 1 or 2, **characterized in that** the frame (10) comprises a fixed part (11), a first mobile part (13) sliding on the fixed part in a first translation direction and a second mobile part (14) sliding on the first mobile part (13) in a second translation direction and from which the lever (29) is suspended, springs (21, 26) connecting the first mobile part to the fixed part and to the second mobile part, and extending along the first and second directions of translation respectively, adjustable stops (18, 23) extending through the fixed part in the first translation direction as far as the first mobile part, and through the first mobile part in the second translation direction as far as the second mobile part, respectively, the stops opposing the force applied by the springs, and locking screws (22, 27) connecting the first mobile part and extending along the first translation direction and the second translation direction, respectively.

4. Mirror support according to any one of claims 1 to 3, **characterized in that** the stops (18, 23, 33, 34) are adjusting screws.

5. Mirror support according to any one of claims 1 to 4, **characterized in that** the counter stops (35, 36) are pressure screws.

6. Mirror support according to any one of claims 1 to 5, **characterized in that** the mounting (40) comprises a part (41) fixed to the arm (29) and a rotating tray (42) rotating on the part fixed to the arm, the mirror being fixed to the tray, and a means (45) of adjusting the angular position of the tray.

7. Mirror support according to claim 6, **characterized in that** the means of adjusting the angular position comprises a cam (45) in a groove (46) in the tray (42).

8. Mirror support according to any one of claims 1 to 7, **characterized in that** it comprises a mounting (40) of the mirror pivoting in the frame (14) through a ring (49), the ring pivoting in the frame about the first axis and the mounting pivoting in the ring about a second axis perpendicular to the first axis.

9. Mirror support according to claim 2, **characterized in that** the arm (39) is articulated to the frame close to the mirror (5) and to the lever (29) opposite the mirror, adjacent to the stop and the counter stop (31) remote from the mounting.
